# DEMANDE DE BREVET EUROPEEN

(11) **EP 2 562 675 A1**
(43) Date de publication de la demande: **27.02.2013**
(21) Numéro de dépôt: 11306056.0
(22) Date de dépôt: 19.08.2011
(51) Int. Cl.: G06F 21/70

(54) **Procédé de cloisonnement matériel des ressources d'un système informatique sécurisé**

(71) Demandeur: Gemalto SA, 92190 Meudon (FR)
(72) Inventeur: Gonzalvo, Benoit, 92190 Meudon (FR); Loubet Moundi, Philippe, 92190 Meudon (FR)

(57) **Abrégé**

La présente invention a pour objet un procédé de cloisonnement matériel des ressources d'un système informatique sécurisé. Le matériel du système comporte un mécanisme hardware destiné à:
- générer une clé cryptographique à chaque nouveau programme détecté par le système, cette clé étant spécifique à chaque programme,
- stocker ladite clé associée à un identifiant du programme dans les ressources du système,
- chiffrement et stockage dans les ressources du système de toutes les données créées par le programme avec la clé qui lui est spécifique,
- déchiffrement des données du programme avec la clé qui lui est spécifique en réponse à une requête de manipulation, appel, lecture et/ou écriture, émanant d'un programme requérant.

## Description

### Domaine de l'invention

La présente invention a pour objet un procédé de cloisonnement matériel des ressources d'un système informatique sécurisé. Plus particulièrement, la présente invention concerne un procédé de cloisonnement d'une mémoire non volatile du type par exemple flash. L'invention a également pour objet un système mettant en oeuvre un tel procédé de cloisonnement.

### Etat de la technique

Durant ces dernières années, plusieurs architectures logicielles de protection d'une mémoire ont été proposées pour empêcher un attaquant de perturber le bon fonctionnement d'une application ou d'un programme de sorte à accéder à ladite mémoire afin d'en récupérer une image complète.

Une solution de protection connue consiste à gérer l'accès de la mémoire par une unité de gestion mémoire (MMU pour Memory Management Unit). Selon le principe de la MMU, chaque programme exécuté par le système d'exploitation se voit attribuer une zone mémoire protégée, dans laquelle aucun autre programme ne peut accéder. Par conséquent, un programme donné ne peut pas accéder (en lecture et/ou écriture) à la mémoire utilisée par un autre programme, voire par le système d'exploitation lui même.

Si une tentative d'accès à de la mémoire hors plage est détectée, une interruption est levée par la MMU. Celle-ci est interceptée par le processeur et cela a généralement pour effet de stopper l'exécution de cette application voire même un reset du système.

Cependant, tous les systèmes d'exploitation ou machine virtuelle ne sont pas pourvus de MMU. En effet, la MMU n'est adaptée que pour les systèmes d'exploitation ou machines virtuelles où les applications sont stockées en des zones précises de la mémoire.

La machine virtuelle de Java Card est un exemple de machine virtuelle dans laquelle la protection de la mémoire est réalisée sans MMU. La protection de la mémoire est réalisée à l'aide d'un mécanisme logiciel qui comporte un mécanisme d'isolation (nommé parfois pare-feu) permettant le passage sélectif des flux d'informations entre les applications. Ce mécanisme d'isolation a pour but de neutraliser les tentatives d'accès non autorisées aux données des applications en provenance d'autres applications. Cette protection apportée par la gestion de l'accès aux applications effectuées par le pare-feu peut être complétée par une protection au niveau du système d'exploitation ou hardware des pages de la mémoire de toute tentative d'accès non autorisée.

Cette protection des pages de la mémoire est obtenue par un chiffrement du contenu de la mémoire avec une clef de chiffrement unique afin de fournir un environnement d'exécution résistant aux attaques physiques et aux fuites d'informations via le bus d'adresse du processeur.

Cependant, ce type de protection de la mémoire présente des inconvénients. En effet, par des perturbations physiques (injection de fautes) effectuées sur la mémoire, l'attaquant peut transformer une lecture anodine d'une application donnée en une récupération d'une image complète de la mémoire. Pour renforcer la protection de la mémoire, il est connu une autre solution qui consiste à chiffrer chaque page de données de la mémoire avec une clef qui lui est spécifique. Un attaquant qui copie la mémoire ne pourra accéder qu'aux applications partageant la même page que celle via laquelle la copie (ou dump) a pu être réalisée. Pour cloisonner les applications les unes par rapport aux autres, il faudrait une page par application ce qui dégraderait l'optimisation des ressources de la mémoire.

L'inconvénient majeur d'une telle gestion de la mémoire réside dans le fait que la protection de la mémoire repose sur la couche logicielle quelque soit la granularité de protection à apporter à ladite mémoire (chiffrement du contenu de la mémoire, chiffrement par page ou chiffrement par application). La baisse de performances de la machine virtuelle due à la gestion logicielle de la protection mémoire est particulièrement sensible à la granularité de protection choisie. Plus cette granularité est fine plus des ressources systèmes qui pourraient être employées à d'autres fins seront monopolisées.

Ainsi actuellement, s'est fait sentir le besoin d'améliorer la protection de la mémoire tout en évitant une dégradation des performances du système.

### Exposé de l'invention

L'invention a justement pour but de répondre à ce besoin. Pour cela, l'invention propose un procédé de protection de la mémoire dont la gestion n'est plus effectuée au niveau logiciel mais plutôt au niveau matériel ou hardware.

Pour ce faire, l'invention propose un mécanisme hardware capable d'une part de gérer l'identification des programmes afin de retrouver les clés qui lui sont associées et d'autre part de protéger le contenu de ladite mémoire avec ces mêmes clés.

Pour ce faire, le mécanisme hardware comporte des moyens destinés à générer de nouvelles clés sur demande et de les stocker de manière sécurisée. Chaque clé générée est spécifique à un programme. Ce mécanisme comporte des moyens destinés à chiffrer la donnée du programme avec la clé active générée lors d'une phase de stockage. Le mécanisme comporte des moyens aptes à déchiffrer lesdites données du programme avec ladite clé spécifique en réponse à une requête en lecture, écriture ou sollicitation. Ce mécanisme est capable de chiffrer les données à la granularité d'un multiple de l'octet.

Ainsi avec l'invention, chaque application peut être protégée avec une clé dédiée obtenue sur demande. Par conséquent, une récupération (ou dump) d'une image complète de la mémoire via une application ne permettra pas l'accès aux autres applications de la mémoire. Les applications sont ainsi cloisonnées de manière hardware les unes des autres.

La présente invention a donc pour objet un procédé de cloisonnement matériel des ressources d'un système informatique sécurisé. Le matériel du système comporte un mécanisme hardware destiné à:
- générer une clé cryptographique à chaque nouveau programme détecté par le système, cette clé étant spécifique à chaque programme,
- stocker ladite clé associée à un identifiant du programme dans les ressources du système,
- chiffrement et stockage dans les ressources du système de toutes les données créées par le programme avec la clé qui lui est spécifique,
- déchiffrement des données du programme avec la clé qui lui est spécifique en réponse à une requête de manipulation, appel, lecture et/ou écriture, émanant d'un programme requérant.

L'invention a également pour objet un système informatique sécurisé comportant des moyens matériels destinés à exécuter le procédé de cloisonnement matériel de ses ressources selon l'invention.

Dans un mode de réalisation préféré, les ressources du système à cloisonner peuvent être tout type de mémoire non volatile existant ou à venir. Ces mémoires peuvent être du type flash, MRAM, PCRAM ou FeRAM.

### Brève description des dessins

L'invention sera mieux comprise à la lecture de la description qui suit et à l'examen des figures qui l'accompagnent. Celles-ci sont présentées à titre indicatif et nullement limitatif de l'invention.
La figure 1 montre une illustration d'étapes correspondant à un mode de fonctionnement du procédé de l'invention.
Les figures 2 et 3 montrent respectivement une représentation schématique d'un mécanisme hardware de contrôle d'accès aux ressources selon un mode de réalisation de l'invention.

### Description détaillée de modes de réalisation de l'invention

La présente invention va maintenant être décrite en détail en référence à quelques modes de réalisation préféré, comme illustré dans les dessins annexés. Dans la description suivante, de nombreux détails spécifiques sont prévus afin d'offrir une compréhension approfondie de la présente invention. Il sera évident, cependant, à un homme de l'art, que la présente invention peut être pratiquée sans tout ou partie de ces détails spécifiques.

Afin de ne pas obscurcir inutilement la description de la présente invention, des structures bien connues, des dispositifs ou des algorithmes n'ont pas été décrits en détail.

Il est à rappeler que, dans la description, quand une action est attribuée à un programme ou un système comprenant un microprocesseur, cette action est exécutée par le microprocesseur commandé par des codes instructions enregistrés dans une mémoire de ce système.

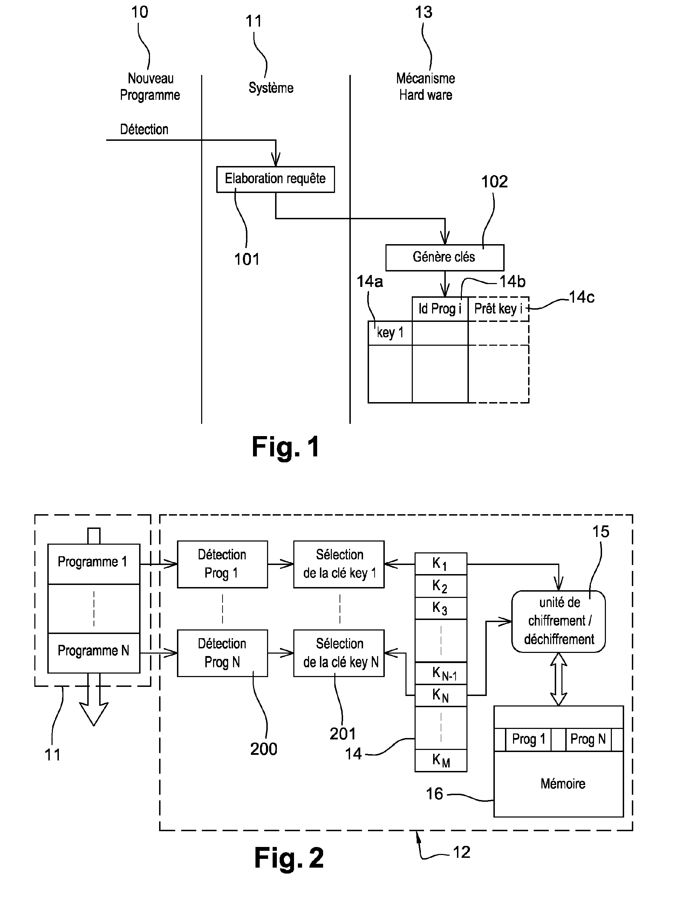

La figure 1 montre un exemple de mode de fonctionnement d'une phase d'initialisation d'un mode de cloisonnement matériel des ressources d'un système informatique sécurisé, et notamment aux programmes et aux données de ce dernier. Un système informatique sécurisé peut être un système d'exploitation, un environnement d'exécution, une machine virtuelle, etc.

Ici, le terme matériel (connu sous le nom anglais de hardware) fait référence par antagonisme à la couche logicielle du système. Dans l'invention, le mode de cloisonnement est effectué par un mécanisme hardware 13 du matériel 12. Ce mécanisme hardware 13 comporte l'ensemble des dispositifs incorporés au matériel 12 destinés à exécuter le procédé de cloisonnement de l'invention.

Ce mécanisme hardware 13 est implémenté dans le matériel 12 selon des contraintes de taille (capacité) et/ou de rapidité des traitements souhaités. Dans un mode de réalisation, il peut être implémenté dans la mémoire à cloisonner.

Lorsque plusieurs programmes s'exécutent simultanément (ou alternativement) dans le système, on veut s'assurer que l'exécution de l'un n'affecte pas l'exécution des autres, ni celle du système : ils sont isolés. On peut laisser certains programmes interagir entre eux, mais uniquement dans le cadre d'une politique (pare-feu ou firewall) stricte de partage contrôlé des données. Cette politique stricte de partage et le mécanisme hardware de l'invention permet une protection contre la propagation d'erreurs involontaires de programmation, mais aussi et surtout d'actions malveillantes (telle qu'une attaque du type dump) qui vient altérer le bon fonctionnement du système et des programmes ou à dévoiler des informations confidentielles.

Par programme, l'on entend ici non seulement le code exécutable, c'est-a-dire une suite d'instructions, mais aussi le processus (ou tâche), c'est-a-dire le code en cours d'exécution, avec son environnement spécifique constitué des données qui lui sont propres ainsi que des ressources qui lui sont attribuées.

Par données l'on entend aussi bien des valeurs manipulées par un programme que les zones de mémoire où sont rangées des valeurs. Selon les systèmes, les données appartiennent au programme qui les a créés ou, plus généralement, à un groupe de programmes qui disposent de droits d'accès sur ces données. Ces droits gérés par le pare-feu peuvent être attribués à d'autres programmes pour des opérations particulières choisies; de telles données sont dites partageables.

Par exemple, dans le langage « Java Card » (marque déposée de Sun Microsystems), les programmes sont organisés en «packages » (paquetages) à l'intérieur desquels le partage de données (objets et tableaux) est libre. En revanche, l'accès à des données qui appartiennent à un autre « package » est limité par deux dispositifs logiciels: un mécanisme de gestion d'accès et un mécanisme de pare-feu (« firewall »). En effet, pour accéder à une donnée dont on n'est pas propriétaire, il faut en faire la demande à la machine virtuelle qui peut accepter ou refuser la requête d'accès. Par ailleurs, le pare-feu filtre toutes les opérations que l'on peut faire sur une donnée, quel que soit le moyen par lequel on se l'est procurée. En particulier, toute opération de lecture ou d'écriture sur un objet d'un autre « package » est interdite, sauf pour appeler une méthode (routine de programme) explicitement déclarée par ce «package » comme partageable.

Cette protection logicielle des accès aux données de la mémoire est complétée par le procédé de cloisonnement de la mémoire illustré aux figures 1 à 3.

La phase d'initialisation illustrée à la figure 1 comporte une étape 100 préliminaire dans laquelle le système 11 détecte un nouveau programme 10. A une étape 101, le système 11 élabore une requête de génération d'une nouvelle clef à destination du mécanisme hardware 13. Cette requête comporte notamment un identifiant du programme. Dans un mode de réalisation, la requête de génération d'une nouvelle clef comporte un contexte matérialisé par un octet avec une valeur numérique d'identification du programme. Ce contexte est stocké dans les headers. A une étape 102, le mécanisme hardware génère une nouvelle clef Kᵢ spécifique audit nouveau programme 10. Cette clé peut être générée aléatoirement.

A une étape 103, le mécanisme hardware 12, stocke dans une mémoire 14 de cloisonnement du matériel la clé Kᵢ. La mémoire 14 est, par exemple, structurée en une table. Par exemple, une ligne de la table correspond à une clé Kᵢ générée par le mécanisme hardware, chaque colonne de la table correspond à un renseignement sur le programme à qui est attribuée cette clé. Ainsi, la mémoire 14 comporte notamment une ligne 14a correspondant à une clé Kᵢ, une colonne 14b dans laquelle est renseignée l'identité du programme pour laquelle ladite clé a été générée. Toutes les données créées ensuite par le programme 10 sont chiffrées avec la clé qui lui est associée.

La figure 2 montre un mode de réalisation où le rôle du système 11 est cantonné à un relais entre le matériel 12 et un programme pour toute requête de manipulation (appel, lecture ou écriture) des données d'un programme.

Dans l'exemple de la figure 2, des programmes 1 à N s'exécutent simultanément (ou alternativement) dans le système 11. Lors de l'exécution, les programmes 1 à N émettent des requêtes de manipulation d'une donnée. Dès détection par le système 11 d'une telle requête de manipulation, ledit système émet à destination du matériel 12 un message comportant notamment la requête de manipulation, un identifiant du programme à qui appartient la donnée à manipuler. A une étape 200, le mécanisme hardware 13 réceptionne le message émis par le système 11. A une étape 201, le mécanisme hardware 13 extrait de la mémoire 14 de cloisonnement la clé Kᵢ associé à l'identifiant dudit programme.

Si la requête de manipulation est une requête d'écriture, le mécanisme hardware 13 transmet la clé Kᵢ extraite à une unité de chiffrement/déchiffrement 15. L'unité 15 est apte à chiffrer la donnée du programme reçue du système 11 par la clé Kᵢ spécifique à ce programme. Cette donnée chiffrée est ensuite stockée dans la mémoire 16 de stockage. Lorsque la mémoire 16 de stockage est organisée en page, plusieurs programmes peuvent être enregistrés sur la même page tout en étant cloisonnés les uns des autres.

Cette granularité de protection proposée par l'invention permet, par un chiffrement des données avec une clé spécifique à chaque programme, de créer un mécanisme de cloisonnement des données d'un programme des autres données des autres programmes, garantissant ainsi la confidentialité des données.

Si la requête de manipulation est une requête en lecture ou en sollicitation d'une donnée, le mécanisme hardware retrouve la clé à utiliser grâce à l'identifiant du programme couramment sélectionné. Dès réception de la donnée chiffrée, l'unité 15 la déchiffre avec la clé Kᵢ extraite associé au programme. Le mécanisme hardware 13 transmet ensuite au programme requérant la donnée déchiffrée via le système 11.

Si une récupération d'une image complète de la mémoire est effectuée lors de l'exécution de la requête de manipulation, le déchiffrement des données des autres programmes que celui requérant se fera avec la mauvaise clé.

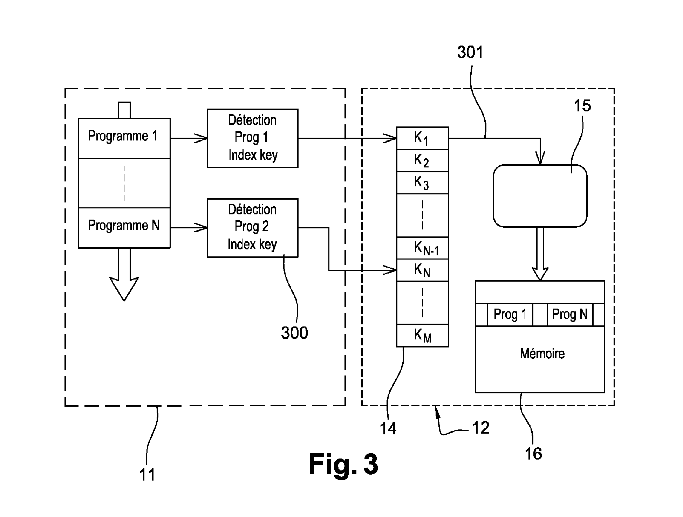

La figure 3 montre un autre mode de réalisation où le rôle du système 11 est accru par rapport à celui décrit à la figure 2. Dans l'exemple de la figure 3, à chaque fois qu'une clé Kᵢ est générée par le mécanisme hardware durant la phase d'initialisation, une référence d'identification de cette clé Kᵢ est transmise par le matériel 12 au système 11 en vue de sa mémorisation dans une base de données du système. Cette référence d'identification est stockée dans une colonne 14c de la ligne 14a correspondant à la clé Kᵢ générée de la mémoire 14 de cloisonnement. Cette référence est souvent un pointeur ou un «handle ». Un pointeur est l'adresse où se trouve rangée une donnée dans la mémoire. Un « handle » est un index dans une table de pointeurs (ou plus généralement dans une table de références). Les valeurs des pointeurs et «handles » comportent aussi parfois des bits spécifiques qui donnent des informations sur la donnée (par exemple sur la zone mémoire référencée ou sur l'information s'y trouvant) ou, dans le cas de « handles », sur la table associée.

Dans un autre mode de réalisation, la référence d'identification est générée par le système 11, lors de la phase d'initialisation illustrée à la figure 1, et transmis au matériel 12. Pour associer la référence d'identification reçue à la clé générée, le mécanisme hardware le stocke dans la colonne 14c de la clé générée. Cette référence d'identification est également stockée dans la base de données du système.

Lorsque le système 11 reçoit d'un des programmes 1 à N en cours d'exécution une requête de manipulation d'une donnée, il extrait, à une étape 300, de sa base de données la référence d'identification de la clé Kᵢ associée au programme de la donnée demandée. Le système 11 transmet ensuite au matériel 12 un message comportant notamment la référence d'identification extraite ainsi que la requête de manipulation comprenant l'identifiant du programme à qui appartient la donnée à manipuler.

Le mécanisme hardware 13 réceptionne ensuite le message émis par le système 11. Le mécanisme hardware 13 extrait de la mémoire 14 de contrôle d'accès la clé Kᵢ associé à la référence d'identification reçue.

Si la requête de manipulation est une requête d'écriture, le mécanisme hardware 13 transmet la clé Kᵢ extraite à une unité de chiffrement/déchiffrement 15. L'unité 15 est apte à chiffrer la donnée du programme reçue du système 11 par la clé Kᵢ spécifique à ce programme. Cette donnée chiffrée est ensuite stockée dans la mémoire 16 de stockage.

Si la requête de manipulation est une requête de lecture ou de sollicitation d'une donnée, le mécanisme hardware 13 retrouve la clé à utiliser grâce à la référence d'identification reçue et à l'identifiant du programme couramment sélectionné. Dès réception de la donnée chiffrée, l'unité 15 la déchiffre avec la clé Kᵢ extraite associée au programme. Le mécanisme hardware 13 transmet ensuite au programme requérant la donnée déchiffrée via le système 11.

La représentation des mémoires 14 de cloisonnement et 16 de stockage n'est qu'une illustration d'implantation possible de composants et d'enregistrements de données. Dans la pratique, ces mémoires sont unifiées ou distribuées selon des contraintes de taille (capacité) et/ou de rapidité des traitements souhaités.

## Revendications

1. Procédé de cloisonnement matériel d'une mémoire d'un système informatique sécurisé dans lequel un mécanisme hardware du matériel effectue les étapes suivantes :
- génération d'une clé cryptographique à chaque nouveau programme détecté par le système, cette clé étant spécifique à chaque programme,
- stockage de ladite clé associée à un identifiant du programme dans la mémoire,
- chiffrement et stockage dans la mémoire du matériel de toutes les données créées par le programme avec la clé qui lui est spécifique,
- déchiffrement des données du programme avec la clé qui lui est spécifique en réponse à une requête de manipulation, appel, lecture et/ou écriture, émanant d'un programme requérant.

2. Procédé de cloisonnement selon la revendication 1, dans lequel à chaque fois qu'une nouvelle clé est générée par le mécanisme hardware, une référence d'identification de cette clé est transmise au système en vue de sa mémorisation dans une base de données dudit système.

3. Procédé de cloisonnement selon la revendication 1, dans lequel une référence d'identification de la clé générée est fournie par le système au mécanisme hardware en vue de son association à ladite clé dans la mémoire.

4. Procédé de cloisonnement selon l'une des revendications 2 à 3, dans lequel
- le système extrait de sa base de données la référence de la clé associée au programme de la donnée requise par une requête de manipulation émise par un programme,
- le système transmet ensuite au mécanisme hardware la requête de manipulation et la référence extraite,
- le mécanisme hardware extrait de la mémoire du matériel la clé associée à la référence reçue et chiffre ou déchiffre la donnée requise en fonction de la requête et des paramètres du contexte du pare-feu.

5. Procédé de cloisonnement selon l'une des revendications précédentes, dans lequel le système informatique sécurisé est un système d'exploitation, un environnement d'exécution ou une machine virtuelle.

6. Procédé de cloisonnement selon l'une des revendications précédentes, dans lequel la mémoire du système à cloisonner est une mémoire non volatile.

7. Procédé de cloisonnement selon la revendication précédente, dans lequel la mémoire non volatile est une mémoire flash, MRAM, PCRAM, ou FeRAM.

8. Système informatique sécurisé comportant des moyens matériels destinés à exécuter un procédé de cloisonnement matériel de ses ressources selon l'une des revendications précédentes.
